(19) Europäisches Patentamt / European Patent Office / Office européen des brevets

(11) **EP 4 614 448 A1**

(12) **EUROPEAN PATENT APPLICATION**

(43) Date of publication:
**10.09.2025 Bulletin 2025/37**

(21) Application number: **25161492.1**

(22) Date of filing: **04.03.2025**

(51) International Patent Classification (IPC):
*G06T 17/00* $^{(2006.01)}$   *G06T 15/08* $^{(2011.01)}$

(52) Cooperative Patent Classification (CPC):
**G06T 17/00; G06T 15/08; G06T 15/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.03.2024 JP 2024032877**

(71) Applicant: **CANON KABUSHIKI KAISHA Tokyo 146-8501 (JP)**

(72) Inventor: **NAKADA, Yuichi Ohta-ku, Tokyo, 146-8501 (JP)**

(74) Representative: **TBK Bavariaring 4-6 80336 München (DE)**

(54) **IMAGE PROCESSING APPARATUS, IMAGE PROCESSING METHOD, AND PROGRAM**

(57) Three-dimensional information which enables generation of a high-quality virtual viewpoint image is estimated while reducing the amount of computations for estimating the three-dimensional information. An image processing apparatus (102) according to this disclosure obtains data on a captured image (S401), extracts a high-frequency pattern region from the captured image (S402), generates a plurality of ray groups based on rays corresponding to each of a plurality of pixels included in the captured image (S403), and learns three-dimen-sional information on a space using the plurality of ray groups (S404), wherein the image processing apparatus generates the plurality of ray groups including one or more high-frequency pattern region ray groups which are ray groups where a density of rays corresponding to pixels included in the high-frequency pattern region is higher than a density of rays corresponding to pixels included in a region other than the high-frequency pattern region (S702).

FIG.3

**Description**

BACKGROUND

Field

The present disclosure relates to a technique to estimate three-dimensional information about a space including an object.

Description of the Related Art

There is a technique of estimating information (hereinafter referred to as "three-dimensional information") about a space including an object using images (hereinafter referred to as "captured images") obtained by capturing the object from various directions. There is also a technique of generating an image (hereinafter referred to as "virtual viewpoint image") corresponding to a representation of an object viewed from an arbitrary virtual viewpoint (hereinafter referred to as "virtual viewpoint") using three-dimensional information. However, in a case where the object has a complicated three-dimensional shape, color, reflection property, or the like, there is a possibility that three-dimensional information about a space including the object cannot be correctly estimated, which may result in deterioration in image quality of the virtual viewpoint image.

Japanese Patent Laid-Open No. 2023-66705 (hereinafter referred to as "Patent Literature 1") discloses a technique of learning, as three-dimensional information, radiance fields which represent colors and densities according to positions and directions in a space including an object using captured images as training images. Patent Literature 1 also discloses a technique of generating a virtual viewpoint image by volume rendering using the radiance fields estimated by learning. Specifically, in the technique disclosed in Patent Literature 1, learning parameters corresponding to the radiance fields are calculated by sampling and machine learning of a point on a ray corresponding to each pixel of a training image. More specifically, in the technique disclosed in Patent Literature 1, in the calculation, a sampling density of a ray corresponding to each pixel of the training image within the depth of field is higher than a sampling density out of the depth of field. The technique disclosed in Patent Literature 1 controls the sampling density based on the depth of field, thereby improving the estimation accuracy of radiance fields of a space corresponding to an object within the depth of field while reducing the amount of computations for estimating the radiance fields and improving the image quality of the virtual viewpoint image.

SUMMARY

However, the inventor(s) herein recognized that since the technique disclosed in Patent Literature 1 uniformly reduces the sampling density of rays out of the depth of field, the radiance fields of a space corresponding to an object out of the depth of field cannot be estimated with high accuracy.

Thus, the present disclosure aims to provide a technique to estimate three-dimensional information which enables generation of a high-quality virtual viewpoint image while reducing the amount of computations for estimating the three-dimensional information.

The present disclosure in its first aspect provides an image processing apparatus as specified in claims 1 to 12.

The present disclosure in its second aspect provides an image processing method as specified in claim 13.

The present disclosure in its third aspect provides programs as specified in claims 14.

Further features of various embodiments will become apparent from the following description of exemplary embodiments with reference to the attached drawings.

BRIEF DESCRIPTION OF THE DRAWINGS

FIG. 1 is a diagram showing an example of a configuration of an image processing system according to a first embodiment;

FIG. 2 is a block diagram showing an example of a hardware configuration of an image processing apparatus according to the first embodiment;

FIG. 3 is a block diagram showing an example of a functional configuration of the image processing apparatus according to the first embodiment;

FIG. 4 is a flowchart showing an example of a processing flow in the image processing apparatus according to the first embodiment;

FIG. 5A is a diagram showing an example of arrangement of image capturing apparatuses according to the first embodiment and FIGS. 5B to 5D are diagrams showing an example of captured images;

FIGS. 6A to 6C are diagrams for illustrating an extraction process of a high-frequency pattern region in an extraction unit according to the first embodiment;

FIG. 7 is a flowchart showing an example of the flow of a generation process of ray groups in a ray group generation unit 303 according to the first embodiment;

FIGS. 8A and 8B are diagrams for illustrating examples of ray groups generated by the ray group generation unit according to the first embodiment;

FIGS. 9A and 9B are diagrams for illustrating an example of a ray corresponding to each piece of ray information included in ray groups according to the first embodiment;

FIG. 10 is a flowchart showing an example of the flow of a learning process of three-dimensional information in a learning unit according to the first embodiment;

FIG. 11 is a flowchart showing an example of the flow of the extraction process of the high-frequency pattern region in the extraction unit according to a second embodiment;

FIGS. 12A to 12D are diagrams for illustrating the extraction process of the high-frequency pattern region in the extraction unit according to the second embodiment;

FIG. 13 is a diagram showing an example of an approximate shape of an object obtained by a visual hull method;

FIG. 14 is a flowchart showing an example of the flow of the generation process of ray groups in the ray group generation unit according to the second embodiment;

FIGS. 15A and 15B are diagrams for illustrating examples of ray groups generated by the ray group generation unit according to the second embodiment; and

FIGS. 16A and 16B are diagrams for illustrating an example of a ray corresponding to each piece of ray information included in ray groups according to the second embodiment.

## DESCRIPTION OF THE EMBODIMENTS

Hereinafter, with reference to the attached drawings, the present disclosure is explained in detail in accordance with preferred embodiments. Configurations shown in the following embodiments are merely exemplary and the present disclosure is not limited to the configurations shown schematically.

[First Embodiment]

In the present embodiment described below, radiance fields corresponding to a space including an object are learned based on data on captured images (hereinafter referred to as "captured image data") obtained by capturing the object with a plurality of image capturing apparatuses from various directions. Specifically, the above learning in the present embodiment uses ray groups selected based on an image region (hereinafter referred to as "high-frequency pattern region") including a representation of a high-frequency pattern extracted from each captured image so that the density of rays is high in a space including the high-frequency pattern.

<Configuration of Image Processing System>

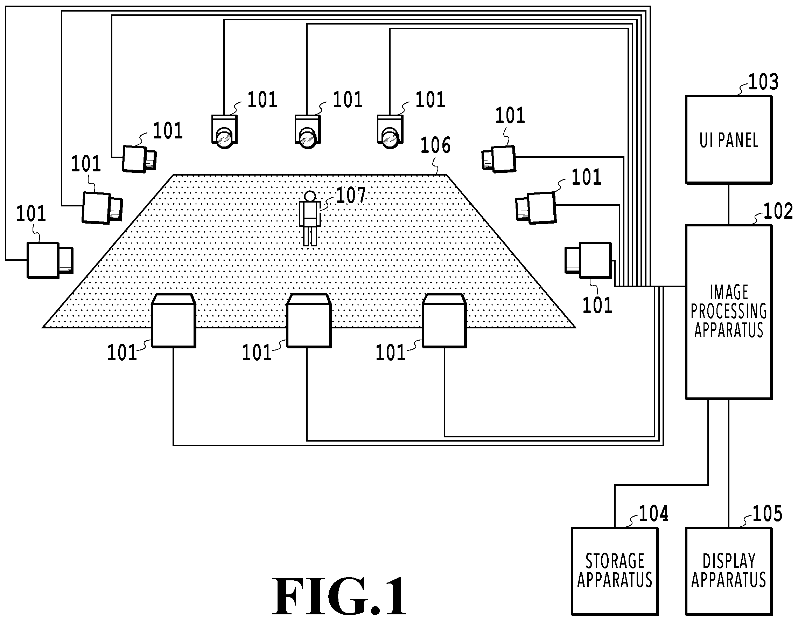

FIG. 1 is a diagram showing an example of a configuration of an image processing system according to the first embodiment. The image processing system comprises a plurality of image capturing apparatuses 101, an image processing apparatus 102, a user interface (hereinafter referred to as "UI") panel 103, a storage apparatus 104, and a display apparatus 105. The plurality of image capturing apparatuses 101 are formed by digital still cameras, digital video cameras, or the like and arranged in different positions each other. The image capturing apparatuses 101 each capture an object 107 existing in an image capturing region 106 from various directions in synchronization with each other according to a predetermined image capturing condition and output captured image data obtained through the image capturing to the image processing apparatus 102. The captured image data obtained through image capturing by the image capturing apparatuses 101 may be either or both of still image data and moving image data. The term "image" used herein means both "still image" and "moving image" unless otherwise specified.

The image processing apparatus 102 obtains data on captured images output from the plurality of image capturing apparatuses 101 and learns information (three-dimensional information) about a three-dimensional shape and color of a space including the object 107 existing in the image capturing region 106 generated using the obtained captured images. Further, the image processing apparatus 102 generates a virtual viewpoint image based on the three-dimensional information obtained as a result of learning. Incidentally, the three-dimensional information in the image capturing region 106 to be learned differs according to the content of learning. In the first embodiment, a radiance field is assumed as an example of the three-dimensional information to be learned.

Although the present embodiment is based on the assumption that each of the plurality of image capturing apparatuses 101 is connected to the image processing apparatus 102 as shown in FIG. 1, the method of connection between the image capturing apparatuses 101 and the image processing apparatus 102 is not limited to this. Specifically, for example, the plurality of image capturing apparatuses 101 may be cascaded by connecting the image capturing apparatuses 101 adjacent to each other and at least one of the plurality of image capturing apparatuses 101 may be connected to the image processing apparatus 102.

Further, although the present embodiment is based on the assumption that the plurality of image capturing apparatuses 101 are arranged in different positions each other, the number and arrangement of image capturing apparatuses 101 are not limited to this. For example, in a case where the position, shape, and color of the object 107 existing in the image capturing region 106, the intensity or color of environmental light, and the like are not changed with time, at least one image capturing apparatus 101 whose position and orientation can be changed may be arranged. In this case, the image capturing apparatus 101 may capture images in different positions while changing its position and orientation and the image processing apparatus 102 may obtain data on the plurality of captured images obtained through the image capturing.

The UI panel 103 comprises a display device such as a liquid-crystal panel and displays on the display device a user interface to provide a user with information such as image capturing conditions in the image capturing apparatuses 101 and processing settings of the image processing apparatus 102. The UI panel 103 may also comprise an input device such as a touch panel or button. In this case, the UI panel 103 accepts an instruction from a user about a change in the above image capturing conditions or processing settings, or the like. The input device may be provided separately from the UI panel 103 as a mouse, keyboard, or the like.

The storage apparatus 104 is formed by a hard disk drive or the like and stores data on a virtual viewpoint image output from the image processing apparatus 102. In a case where the image processing apparatus 102 outputs three-dimensional information, the storage apparatus 104 may store the three-dimensional information output from the image processing apparatus 102. The display apparatus 105 is formed by a liquid-crystal display or the like, obtains an image signal indicating a virtual viewpoint image output from the image processing apparatus 102, and displays the virtual viewpoint image corresponding to the image signal. In a case where the image processing apparatus 102 outputs an image signal indicating three-dimensional information, the display apparatus 105 may obtain an image signal indicating three-dimensional information output from the image processing apparatus 102 and display an image corresponding to the image signal. The image capturing region 106 is a three-dimensional region surrounded by the plurality of image capturing apparatuses 101 installed in a studio or the like. The frame shown by the solid line in FIG. 1 represents the outline of the image capturing region 106 on the floor.

<Hardware Configuration of Image Processing Apparatus>

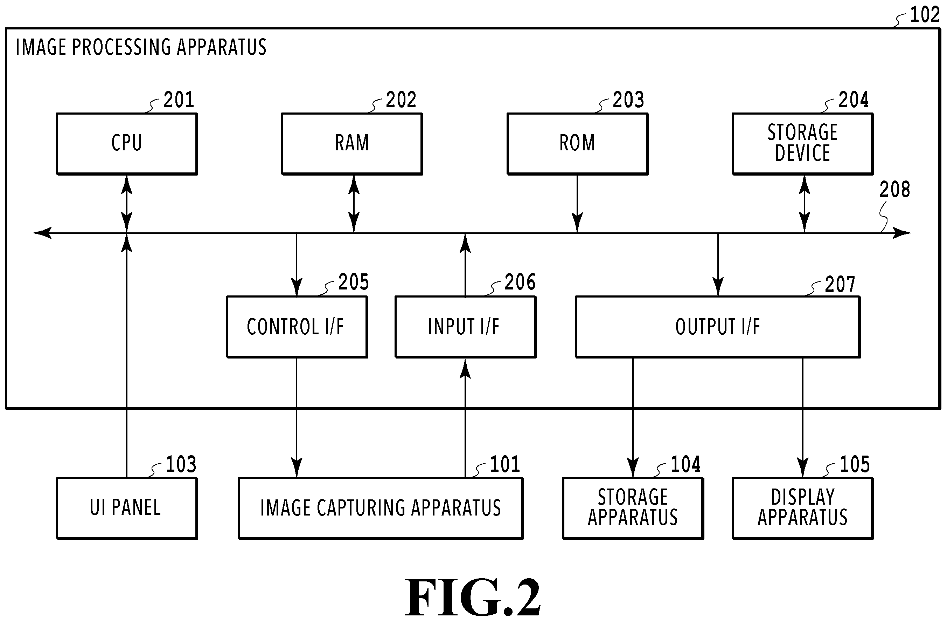

FIG. 2 is a block diagram showing an example of a hardware configuration of the image processing apparatus 102 according to the first embodiment. As the hardware configuration, the image processing apparatus 102 comprises a CPU 201, a RAM 202, a ROM 203, a storage device 204, a control interface (hereinafter referred to as "I/F") 205, an input I/F 206, an output I/F 207, and a main bus 208. The CPU 201 is a processor which has control over each unit of the image processing apparatus 102. The RAM 202 functions as main memory and work area of the CPU 201 and the like. The ROM 203 stores a group of programs executed by the CPU 201. The storage device 204 is formed by a hard disk drive or the like and stores an application program executed by the CPU 201, data used for processing of the CPU 201, and the like.

The control I/F 205 is a communication interface which is connected to each image capturing apparatus 101 and is used to control settings of image capturing conditions for each image capturing apparatus 101, start image capturing, stop image capturing, and the like. The input I/F 206 is a communication interface using a serial bus or the like such as a Serial Digital Interface (SDI) or High-Definition Multimedia Interface (HDMI) (registered trademark). Captured image data output from each image capturing apparatus 101 is obtained via the input I/F 206. The output I/F 207 is a communication interface using a serial bus or the like such as a Universal Serial Bus (USB) or DisplayPort (registered trademark). Data or an image signal of a virtual viewpoint image or the like is output to the storage apparatus 104 or the display apparatus 105 via the output I/F 207. The main bus 208 is a transmission line which connects the above hardware elements of the image processing apparatus 102 so that they can communicate with each other.

<Functional Configuration of Image Processing Apparatus>

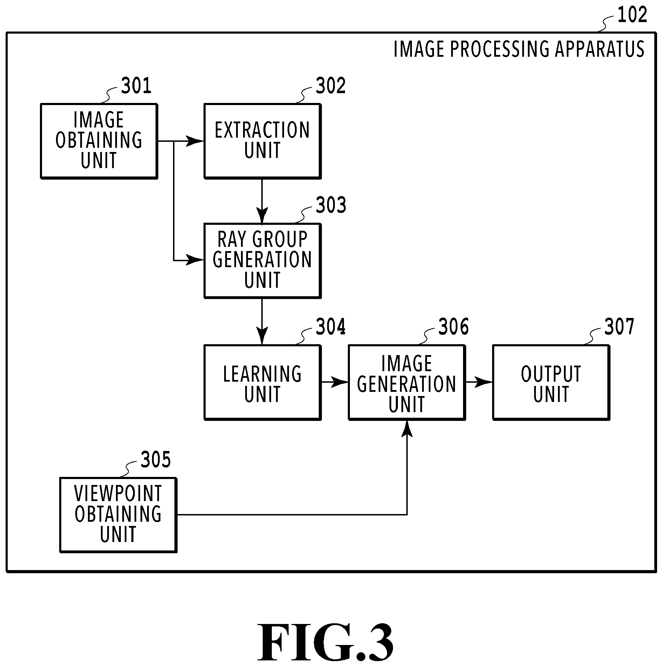

FIG. 3 is a block diagram showing an example of a functional configuration of the image processing apparatus 102 according to the first embodiment. The image processing apparatus 102 comprises an image obtaining unit 301, an extraction unit 302, a ray group generation unit 303, a learning unit 304, a viewpoint obtaining unit 305, an image generation unit 306, and an output unit 307. Each unit the image processing apparatus 102 comprises as the functional configuration is implemented by the CPU 201 executing a program stored in the ROM 203 using the RAM 202 as work memory. Incidentally, not all of the following processes of the units the image processing apparatus 102 comprises as the functional configuration have to be executed by the CPU 201; part or all of the processes may be executed by one or more processing circuits other than the CPU 201.

The image obtaining unit 301 obtains captured image data obtained by each image capturing apparatus 101 capturing the image capturing region 106 and parameters of image capturing (hereinafter referred to as "image capturing parameters") in the image capturing apparatuses 101 corresponding to the captured images. The extraction unit 302 extracts a high-frequency pattern region from the captured images obtained by the image obtaining unit 301. The extraction process of the high-frequency pattern region in the extraction unit 302 will be described later in detail. Based on the captured images and image capturing parameters obtained by the image obtaining unit 301 and the high-frequency pattern region extracted by the extraction unit 302, the ray group generation unit 303 generates a plurality of ray groups including such a ray group that the density of rays is high in a space including the high-frequency pattern. The generation process of ray groups in the ray group generation unit 303 will be described later in detail.

The learning unit 304 learns information (three-dimensional information) about radiance fields of a space including the object 107 based on the ray groups generated by the ray group generation unit 303. The three-dimensional information is, for example, a network parameter in a learning model formed by a multilayer perceptron (MLP) representing the radiance fields of the space including the object 107. The learning process of the three-dimensional information in the learning unit 304 will be described later in detail.

The viewpoint obtaining unit 305 obtains information about a virtual viewpoint (hereinafter referred to as "virtual viewpoint information"). The virtual viewpoint information is information indicating a position of a virtual viewpoint and a line-of-sight direction at the virtual viewpoint and corresponding to an image capturing parameter (hereinafter referred to as "virtual camera parameter") of a virtual image capturing apparatus (hereinafter referred to as "virtual camera") arranged at the virtual viewpoint. The image generation unit 306 generates a virtual viewpoint image using a learned model which is the three-dimensional information obtained as a result of learning by the learning unit 304, that is, information about radiance fields, and the virtual camera parameter obtained by the viewpoint obtaining unit 305. Specifically, the image generation unit 306 performs volume rendering using the three-dimensional information and thereby generates a virtual viewpoint image corresponding to the virtual viewpoint indicated by the virtual camera parameter.

The output unit 307 outputs data on the virtual viewpoint image generated by the image generation unit 306 to the storage apparatus 104 and causes the storage apparatus 104 to store the data. The output unit 307 may output the virtual viewpoint image as an image signal to the display apparatus 105 and cause the display apparatus 105 to display the virtual viewpoint image. The output unit 307 may also output the learned model, which is the three-dimensional information obtained as a result of learning by the learning unit 304, that is, information about radiance fields, to the storage apparatus 104 or the like.

<Operation of Image Processing Apparatus>

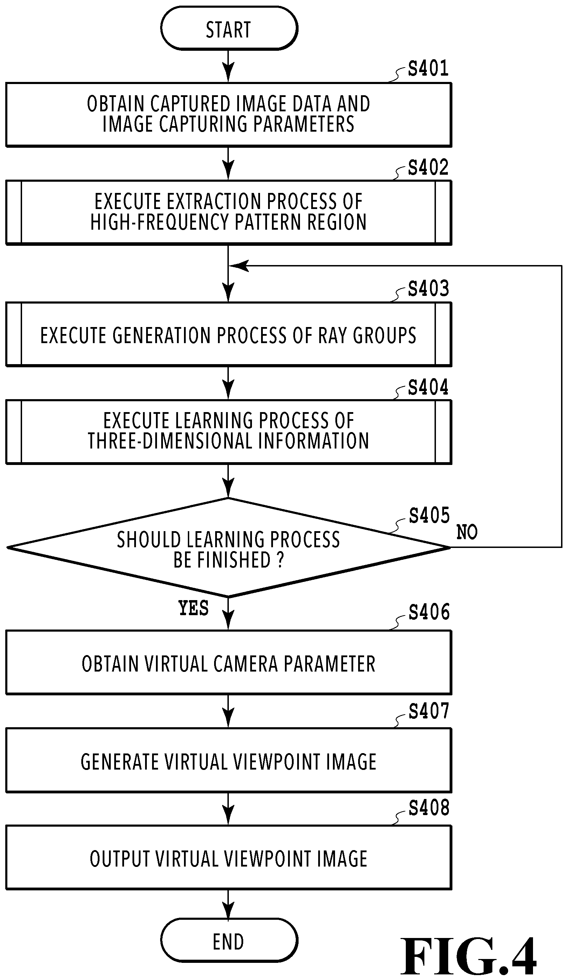

FIG. 4 is a flowchart showing an example of a processing flow in the image processing apparatus 102 according to the first embodiment. In the following description, each processing step is denoted by a reference numeral headed with "S." In a case where each image capturing apparatus 101 outputs moving image data as the captured image data, the image processing apparatus 102 repeats the process of this flowchart each time data on a frame of the moving image obtained through synchronized image capturing is output from the image capturing apparatus 101. First, in S401, the image obtaining unit 301 obtains data on captured images obtained through the image capturing and an image capturing parameter for the image capturing apparatus 101 corresponding to each captured image. Specifically, for example, the captured image data is obtained from the image capturing apparatus 101 via the input I/F 206. The image capturing parameter is calculated by execution of calibration or the like and stored in the storage device 204 in advance, and is then obtained by being read. The captured image data and image capturing parameters obtained in S401 are stored in the RAM 202.

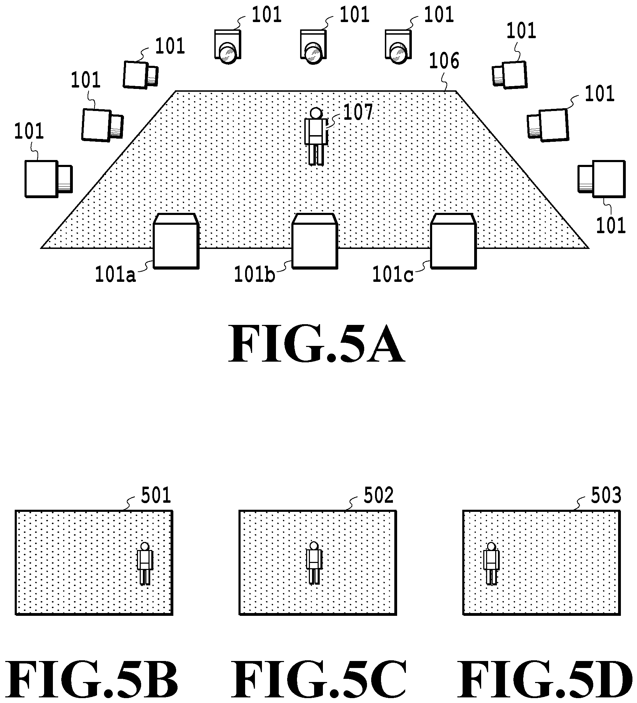

FIG. 5A is a diagram showing an example of arrangement of the image capturing apparatuses 101 according to the first embodiment and FIGS. 5B to 5D are diagrams showing an example of captured images 501 to 503 obtained through image capturing by image capturing apparatuses 101a to 101c. FIG. 5A shows an example of arrangement of the image capturing apparatuses 101, where the image capturing apparatuses 101 are arranged so that the object 107 existing in the image capturing region 106 can be captured from various directions. Incidentally, the image capturing apparatuses 101a, 101b, and 101c shown in FIG. 5A are identical to the other image capturing apparatuses 101. FIG. 5B shows an example of the captured image 501 obtained through image capturing by the image capturing apparatus 101a, FIG. 5C shows an example of the captured image 502 obtained through image capturing by the image capturing apparatus 101b, and FIG. 5D shows an example of the captured image 503 obtained through image capturing by the image capturing apparatus 101c.

After S401, in S402, the extraction unit 302 executes an extraction process of a high-frequency pattern region for each captured image obtained in S401 and thereby extracts the high-frequency pattern region from each captured image obtained in S401. For example, the extraction unit 302 uses a differential filter to specify an image region in which the density of edges of a striped pattern or the like is higher than a predetermined density from each captured image and extracts the specified image region as the high-frequency pattern region. Specifically, for example, the extraction unit 302 first applies a Laplacian filter to the captured image to extract a plurality of pixels with an absolute value of filter output greater than a predetermined threshold as an edge region. Next, the extraction unit 302 sequentially applies, to the extracted edge region, hole removing processing by closing processing and small object removing processing by opening processing, and extracts the result thus obtained as the high-frequency pattern region.

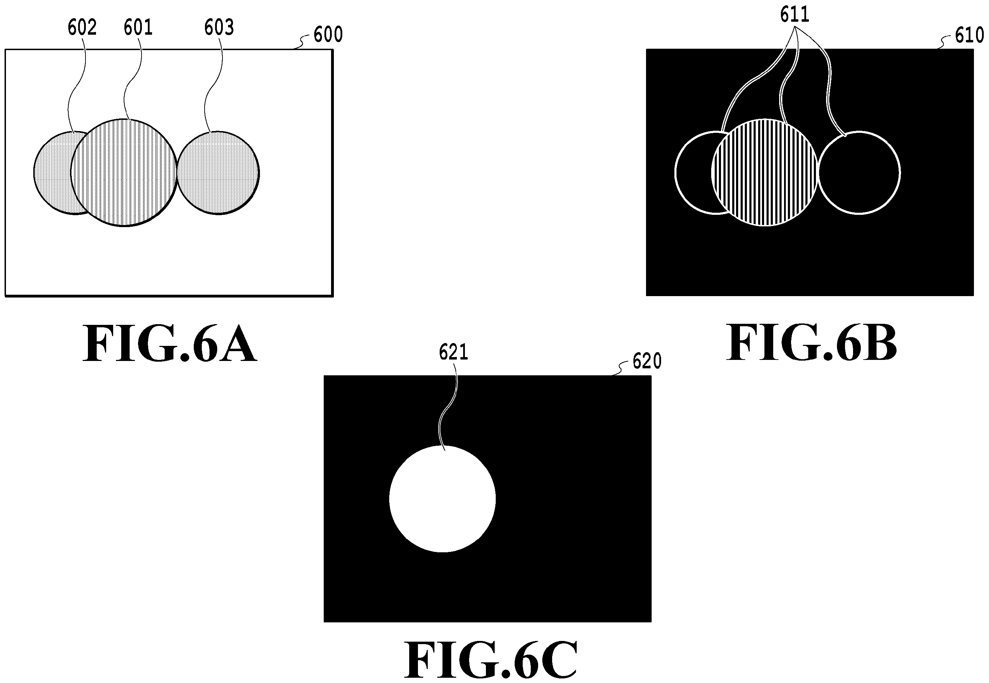

FIGS. 6A to 6C are diagrams for explaining the extraction process of the high-frequency pattern region in the extraction unit 302 according to the first embodiment. FIG. 6A shows an example of a captured image 600 obtained through image capturing by an image capturing apparatus 101. For example, it is assumed that the captured image 600 shown in FIG. 6A includes representations 601 to 603 of three objects existing in the image capturing region 106. FIG. 6B is a diagram showing an example of an image (hereinafter referred to as "edge image") 610 indicating edge regions 611 extracted from the captured image 600 by the extraction unit 302. In the edge image 610 illustrated in FIG. 6B, pixels corresponding to the edge regions 611 are shown in white and pixels corresponding to a region other than the edge regions 611 are shown in black. FIG. 6C shows an example of an image (hereinafter referred to as "high-frequency pattern image") 620 indicating a high-frequency pattern region 621 extracted from the edge image 610 by the extraction unit 302. In the high-frequency pattern image 620 illustrated in FIG. 6C, pixels corresponding to the high-frequency pattern region 621 are shown in white and pixels corresponding to a region other than the high-frequency pattern region 621 are shown in black.

After S402, in S403, the ray group generation unit 303 executes a generation process of ray groups and generates a plurality of ray groups based on the captured images and image capturing parameters obtained in S401 and the high-frequency pattern region extracted in S402. Specifically, the ray group generation unit 303 generates a plurality of ray groups including such a ray group that the density of rays is high in the space including the high-frequency pattern. The generation process of ray groups in the ray group generation unit 303 will be described later in detail. Next, in S404, the learning unit 304 executes a learning process of three-dimensional information and learns a learning model indicating three-dimensional information on the space including the objects, that is, radiance fields in the space, based on the ray groups generated in S403. The learning process of three-dimensional information in the learning unit 304 will be described later in detail.

Next, in S405, the learning unit 304 judges whether to finish the learning process of three-dimensional information. Specifically, the learning unit 304 compares the captured images obtained in S401 with images generated by volume rendering based on the image capturing parameters corresponding to the captured images and the three-dimensional information (learning model representing radiance fields) learned in S404. As a result of the comparison, in a case where a difference between the captured images and the images generated by volume rendering is less than a predetermined threshold, the learning unit 304 judges that the learning process of three-dimensional information is to be finished. In a case where the difference is greater than the predetermined threshold, the learning unit 304 judges that the learning process of three-dimensional information is not to be finished. In a case where the learning unit 304 judges in S405 that the learning process of three-dimensional information is not to be finished, the image processing apparatus 102 returns to the process of S403 and repeats the process from S403 to S405 until the learning unit 304 judges in S405 that the learning process of three-dimensional information is to be finished.

In a case where the learning unit 304 judges in S405 that the learning process of three-dimensional information is to be finished, the viewpoint obtaining unit 305 obtains in S406 a virtual camera parameter set based on an instruction from a user using the UI panel 103. The method of obtaining the virtual camera parameter by the viewpoint obtaining unit 305 is not limited to the above method. For example, the viewpoint obtaining unit 305 may obtain the virtual camera parameter by reading the virtual camera parameter which is set and stored in the storage device 204 in advance.

After S406, in S407, the image generation unit 306 generates a virtual viewpoint image using the virtual camera parameter obtained in S406 and the three-dimensional information (learned model representing radiance fields) obtained as a result of the learning process in S404. Specifically, the image generation unit 306 generates a virtual viewpoint image corresponding to the virtual viewpoint indicated by the virtual camera parameter by performing volume rendering of the three-dimensional information (learned model representing radiance fields) based on the virtual camera parameter.

Next, in S408, the output unit 307 outputs the virtual viewpoint image generated in S407. Specifically, for example, the output unit 307 outputs data on the virtual viewpoint image or an image signal indicating the virtual viewpoint image to the storage apparatus 104, the display apparatus 105, or the like via the output I/F 207. After S408, the image processing apparatus 102 finishes the process of the flowchart shown in FIG. 4. Incidentally, as stated above, in a case where each image capturing apparatus 101 outputs moving image data as the captured image data, the image processing apparatus 102 returns to S401 after S408 and repeats the process of the flowchart.

<Generation Process of Ray Groups>

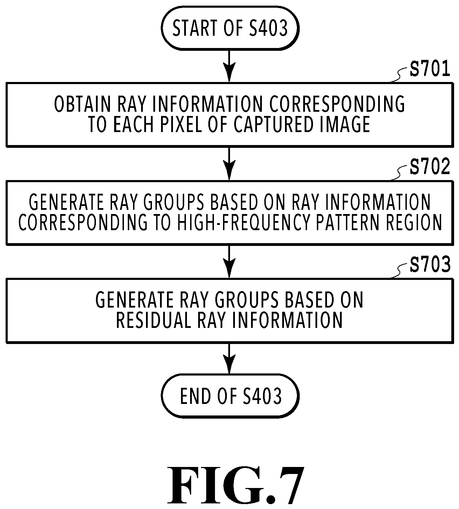

FIG. 7 is a flowchart showing an example of the flow of the generation process of ray groups in the ray group generation unit 303 according to the first embodiment and showing an example of the detailed processing flow in S403 shown in FIG. 4. In S403, a plurality of ray groups including such a ray group that the density of rays is high in the space including the high-frequency pattern are generated based on the captured images and image capturing parameters obtained in S401 and the high-frequency pattern region extracted in S402. The process of this flowchart is executed after the process in S402.

After S402, in S701, the ray group generation unit 303 first obtains information (hereinafter referred to as "ray information") about a ray corresponding to each pixel of the captured images based on the captured images and image capturing parameters obtained in S401. It is assumed in the present embodiment that the ray information includes values concerning a color, start point, and direction of the ray and the ray group generation unit 303 obtains the ray information by calculating these values. The ray group generation unit 303 obtains a value concerning the color of the ray on the assumption that the color of the ray is a color corresponding to a value of the corresponding pixel. The ray group generation unit 303 obtains a value concerning the start point of the ray on the assumption that the start point of the ray is a position of the corresponding image capturing apparatus 101. For the direction of the ray, the ray group generation unit 303 obtains a value concerning the direction of the ray based on the image capturing parameter corresponding to the captured image and coordinates (hereinafter referred to as "image coordinates") of a pixel in the captured image, for example, by performing a computation using the following equation (1):

$$d = ((u-c_x)/f_x, (v-c_y)/f_y, 1) \ldots \text{equation (1)}$$

Here, d is a vector representing a direction of a ray corresponding to image coordinates in a case where two axes orthogonal to each other in the image are X and Y axes and an axis orthogonal to the X and Y axes is a Z axis. (u, v) are image coordinates and $(c_x, c_y)$ are image coordinates corresponding to a center position of the image. $f_x$ is a value obtained by multiplying the number of light-sensitive elements per unit length in the X-axis direction of an image sensor of the image capturing apparatus 101 by a value indicating a focal length of an optical system of the image capturing apparatus 101. Similarly, $f_y$ is a value obtained by multiplying the number of light-sensitive elements per unit length in the Y-axis direction of the image sensor of the image capturing apparatus 101 by the value indicating the focal length of the optical system of the image capturing apparatus 101. $(f_x, f_y)$ is also referred to as a focal length as an intrinsic parameter of the image capturing apparatus 101. It is assumed here that the intrinsic parameter is included in the image capturing parameter.

After S701, in S702, the ray group generation unit 303 generates a plurality of ray groups based on ray information corresponding to image coordinates of each pixel included in the high-frequency pattern region (hereinafter simply referred to as "ray information corresponding to the high-frequency pattern region"). One ray group includes a plurality of pieces of ray information. In the present embodiment, it is assumed that a plurality of ray groups are generated so that the same piece of ray information corresponding to the high-frequency pattern region is not included in more than one ray group. Specifically, the ray group generation unit 303 defines a predetermined number of pieces of ray information selected randomly from the ray information corresponding to the high-frequency pattern region as one ray group. More specifically, the ray group generation unit 303 generates a plurality of ray groups so that the same piece of ray information is not selected multiple times from a plurality of pieces of ray information corresponding to the high-frequency pattern region. The ray group generation unit 303 repeats the above process until the number of unselected pieces of ray information corresponding to the high-frequency pattern region is less than a predetermined number. In this manner, a plurality of ray groups are generated so that the same piece of ray information corresponding to the high-frequency pattern region is not included in more than one ray group. Incidentally, unselected pieces of ray information corresponding to the high-frequency pattern region may be used as residual ray information in the process of S703 to be described later.

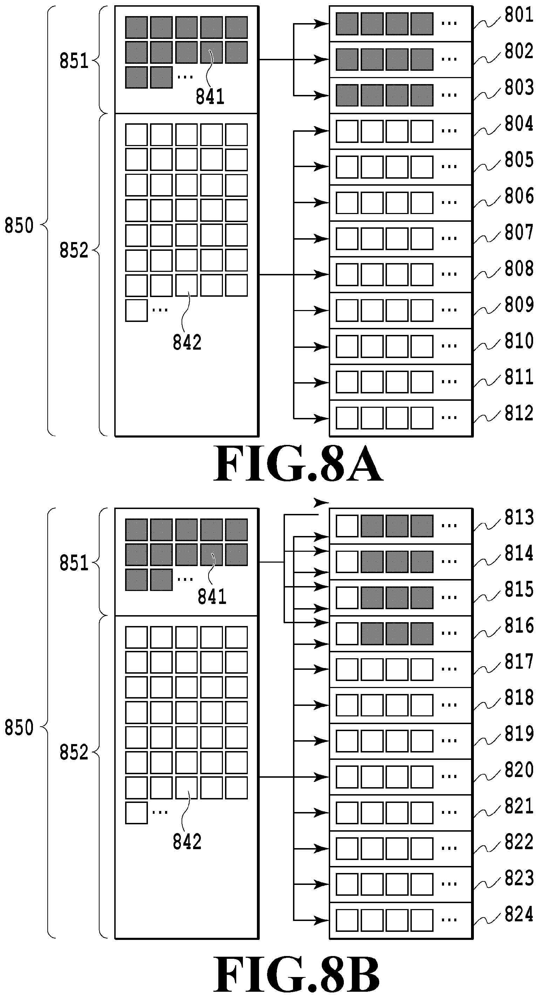

FIGS. 8A and 8B are diagrams for explaining examples of ray groups generated by the ray group generation unit 303. Specifically, FIG. 8A is a diagram for explaining an example of ray groups according to the first embodiment and FIG. 8B is a diagram for explaining an example of ray groups according to modified example 1 of the first embodiment to be described later. In FIGS. 8A and 8B, rectangles 841 filled in gray represent ray information corresponding to the high-frequency pattern region. Rectangles 842 filled in white represent ray information (hereinafter simply referred to as "residual ray information") corresponding to image coordinates of each pixel included in a region (hereinafter referred to as "residual region") other than the high-frequency pattern region. A set of ray information 851 represents a set of all pieces of ray information corresponding to the high-frequency pattern region, which is a set of pieces of ray information that are selectable in a case where the ray group generation unit 303 generates a plurality of ray groups in the process of S702. A set of ray information 852 represents a set of all the residual ray information. A set of ray information 850 represents a set of pieces of ray information corresponding to image coordinates of the all pixels of the captured image, including all the pieces of ray information corresponding to the high-frequency pattern region and all the residual ray information.

The ray group generation unit 303 executes the process of S702 and thereby generates a plurality of ray groups 801 to 803 illustrated as an example in FIG. 8A, each including only the ray information corresponding to the high-frequency pattern region. A ray corresponding to each piece of ray information included in the ray groups 801 to 803 thus generated intersects with the object including the high-frequency pattern.

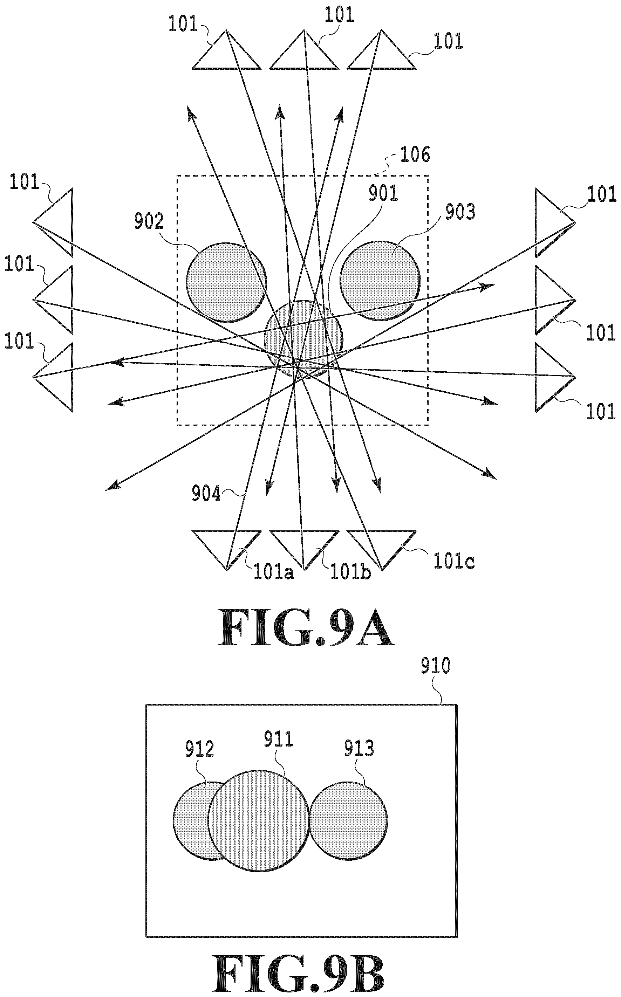

FIGS. 9A and 9B are diagrams for explaining an example of a ray 904 corresponding to each piece of ray information included in the ray groups 801 to 803 shown in FIG. 8A. Specifically, FIG. 9A is a diagram of the image capturing region 106 viewed vertically from above and shows an example of the ray 904 corresponding to each piece of ray information included in the ray groups 801 to 803 shown in FIG. 8A. In FIG. 9A, an object 901 is an object including the high-frequency pattern and objects 902 and 903 are objects not including the high-frequency pattern. FIG. 9B shows an example of a captured image 910 obtained through image capturing by the image capturing apparatus 101c. The captured image 910 shown in FIG. 9B includes representations 911 to 913 of the three objects 901 to 903 existing in the image capturing region 106.

As described above, the ray 904 corresponding to each piece of ray information included in the ray groups 801 to 803 intersects with the object 903 including the high-frequency pattern. Accordingly, as shown in FIG. 9A, the density of rays passing through the space including the high-frequency pattern is higher than the density of rays passing through the other space. Thus, learning can be performed using high-density ray groups for the space corresponding to the object 901 including the high-frequency pattern. As a result, the three-dimensional information (radiance fields) on the space corresponding to the object 901 including the high-frequency pattern can be estimated with high accuracy.

After S702, in S703, the ray group generation unit 303 generates a plurality of ray groups based on the residual ray information. In the present embodiment, a plurality of ray groups are generated so that the same ray information in residual ray information is not included in more than one ray group. Specifically, a predetermined number of pieces of ray information selected randomly from the residual ray information are defined as one ray group. More specifically, the ray group generation unit 303 generates a plurality of ray groups so that the same ray information in residual ray information is not selected multiple times. The ray group generation unit 303 repeats the above process until the number of unselected pieces of residual ray information is less than a predetermined number. In this manner, a plurality of ray groups are generated so that the same ray information in residual ray information is not included in more than one ray group. Incidentally, ray groups 804 to 812 shown in FIG. 8A are an example of ray groups including only the residual ray information, which are generated by the ray group generation unit 303 executing the process of S703.

After S703, the ray group generation unit 303 finishes the process of the flowchart shown in FIG. 7, namely the process of S403 shown in FIG. 4. That is, the ray group generation unit 303 executes the process of S403 and thereby generates a plurality of ray groups 801 to 812 from the set of ray information 850 corresponding to the image coordinates of all the pixels included in the captured image, as illustrated as an example in FIG. 8A.

<Learning Process of Three-Dimensional Information>

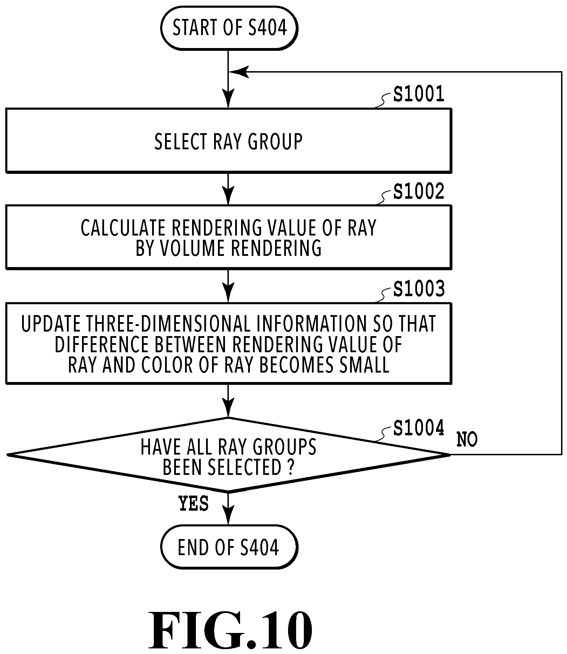

FIG. 10 is a flowchart showing an example of the flow of the learning process of three-dimensional information in the learning unit 304 according to the first embodiment and showing an example of the detailed processing flow in S404 shown in FIG. 4. In S404, rendering values of rays are calculated for each ray group by volume rendering based on the plurality of ray groups generated in S403 and the three-dimensional information is updated so that a difference between the rendering values of the rays and values indicating colors of the rays becomes small. In the present embodiment, it is assumed that the three-dimensional information is a function (learning model) formed by a multilayer perceptron and indicating radiance fields, which function receives the input of information indicating a position and a vector obtained by encoding a direction and outputs a value indicating the corresponding density and color. The process of this flowchart is executed after the process of S403.

After S403, in S1001, the learning unit 304 first selects an arbitrary ray group from the ray groups generated in S403. Specifically, the learning unit 304 randomly selects an arbitrary one of unselected ray groups. The ray group selected in S1001 is hereinafter referred to as "ray group of interest." Next, in S1002, the learning unit 304 performs volume rendering using a plurality of pieces of ray information included in the ray group of interest and thereby calculates a rendering value of a ray corresponding to each piece of ray information. Specifically, in S1002, the learning unit 304 first sets a plurality of sampling points on a ray corresponding to each piece of ray information included in the ray group of interest based on a value concerning a start point of the ray and a value concerning a direction of the ray included in the piece of ray information. Next, in S1002, the learning unit 304 obtains a density and color corresponding to the positions of the sampling points and the direction of the ray based on the learning model indicating radiance fields and calculates the rendering value of the ray corresponding to the piece of ray information by, for example, performing a computation using the following equations (2) and (3):

$$C(r) = \sum_{i=1}^{N} T_i \left( 1 - \exp\left( -\sigma_i \delta_i \right) \right) c_i \quad \cdots \quad \text{equation (2)}$$

$$T_i = exp\left(-\sum_{i=1}^{i-1} -\sigma_i \delta_i\right) \quad \cdots \quad \text{equation (3)}$$

Here, C(r) is a rendering value of a ray r, i and j are indices of sampling points, and N is a total number of sampling points. $\sigma_i$ is a value indicating a density of sampling points, $c_i$ is a value indicating a color of sampling points, and $\delta_i$ is a value indicating a distance to the next sampling point.

After S1002, in S1003, the learning unit 304 updates the three-dimensional information so that a difference between the rendering value of the ray calculated in S1002 and the value concerning the color of the ray included in the ray information becomes small for each piece of ray information included in the ray group of interest. Specifically, the learning unit 304 updates the three-dimensional information by updating a parameter of the function (learning model) indicating radiance fields so that the above difference becomes small. The calculation process of the difference between the rendering value of the ray and the value concerning the color of the ray and the updating process of the learning model described above correspond to an error calculation process and an error propagation process in deep learning. Incidentally, the difference between the rendering value of the ray and the value concerning the color of the ray is defined by, for example, a squared Euclidean distance of a color value specified by R (red), G (green), and B (blue).

Next, in S1004, the learning unit 304 judges whether all the ray groups have been selected in S1001. In a case where the learning unit 304 judges in S1004 that not all the ray groups have been selected, that is, there is an unselected ray group, the learning unit 304 returns to S1001 and repeats the process from S1001 to S1004. In a case where the learning unit 304 judges in S1004 that all the ray groups have been selected, the learning unit 304 finishes the process of the flowchart shown in FIG. 10, namely the process of S404 shown in FIG. 4.

<Advantageous Result Produced by the Image Processing Apparatus According to the First Embodiment>

As described above, the image processing apparatus 102 learns radiance fields of a space including an object based on data on a plurality of captured images obtained by capturing the object with a plurality of image capturing apparatuses from various directions. In particular, in the present embodiment, the image processing apparatus 102 is configured to learn radiance fields, which are three-dimensional information on the image capturing region, using ray groups selected so that the density of rays is high in a space including the high-frequency pattern based on the high-frequency pattern region extracted from the captured images. According to the image processing apparatus 102 thus configured, three-dimensional information which enables generation of a high-quality virtual viewpoint image can be estimated while reducing the amount of computations for estimating the three-dimensional information. In particular, according to the image processing apparatus 102, three-dimensional information on a space corresponding to an object including the high-frequency pattern can be estimated with high accuracy. As a result, the image quality of a virtual viewpoint image generated based on the estimated three-dimensional information can be improved.

[Modified Example 1 of First Embodiment]

The extraction unit 302 according to the first embodiment executes in S402 the filtering processing using the Laplacian filter, the closing processing, and the opening processing and thereby extracts the high-frequency pattern region from the captured image. However, the method of extracting the high-frequency pattern region in the extraction unit 302 is not limited to the above method. For example, the extraction unit 302 may use any other differential filter such as a Sobel filter instead of the Laplacian filter to extract edges from the captured image. Further, for example, instead of the closing processing and the opening processing, the extraction unit 302 may specify a local region having a large proportion of an edge region and extract the specified local region as a high-frequency pattern region. Further, for example, an image including a representation corresponding to a specific object defined as a high-frequency pattern may be prepared as a template image in advance and the extraction unit 302 may extract a high-frequency pattern region by template matching using the template image. Further, for example, the extraction unit 302 may use a detector which detects from an input image a representation corresponding to a specific object predefined as a high-frequency pattern to extract the result of detection by the detector as a high-frequency pattern region.

Further, the ray group generation unit 303 according to the first embodiment generates in S702 ray groups including only the ray information corresponding to the high-frequency pattern region, but the method of generating ray groups in the ray group generation unit 303 is not limited to the above method. For example, the ray group generation unit 303 may generate ray groups including both of the ray information corresponding to the high-frequency pattern region and the residual ray information so that the number of pieces of ray information corresponding to the high-frequency pattern region is equal to or greater than a predetermined number.

Specifically, for example, the number of pieces of ray information corresponding to the high-frequency pattern region and the number of pieces of residual ray information, to be included in one ray group are set in advance. Based on these preset numbers, the ray group generation unit 303 randomly selects ray information from both of all the pieces of ray information corresponding to the high-frequency pattern region and all the pieces of residual ray information and thereby generates ray groups. For example, the number of pieces of ray information corresponding to the high-frequency pattern region to be included in one ray group is set so that a ratio of the number of pieces of ray information corresponding to the high-frequency pattern region to the number of all the pieces of ray information to be included in one ray group is equal to or greater than a predetermined ratio. Here, the predetermined ratio is, for example, a ratio of the number of pixels included in the high-frequency pattern region to the number of all the pixels of the captured image.

FIG. 8B shows an example of ray groups 813 to 816 each including the ray information corresponding to the high-frequency pattern region and the residual ray information generated through the above process by the ray group generation unit 303. Ray groups 817 to 824 shown in FIG. 8B are an example of ray groups including only the residual ray information generated by the ray group generation unit 303 executing the process of S703 after generating the ray groups 813 to 816.

Further, the ray group generation unit 303 according to the first embodiment generates in S702 and S703 a plurality of ray groups so that the same piece of ray information is not included in more than one ray group. However, the ray group generation unit 303 may generate a plurality of ray groups while allowing the same piece of ray information to be included in more than one ray group. In this case, the total number of ray groups may be equal to that in the case where the same piece of ray information is not included in more than one ray group.

Further, the ray group generation unit 303 according to the first embodiment calculates in S701 ray information corresponding to each pixel of the captured image. However, the ray group generation unit 303 may store in the RAM 202 or the like the ray information calculated in the first execution of S701 and obtain the ray information stored in the RAM 202 or the like in the second execution of S701 onward.

Further, the three-dimensional information according to the first embodiment is described as a radiance field, which is a function (learning model) expressed by a multilayer perceptron, but the method of expressing the radiance field is not limited to this. For example, the radiance field may be expressed by using a plurality of multilayer perceptrons, a sparse three-dimensional grid including spherical surface harmonics, or a tensor.

Further, the learning unit 304 according to the first embodiment is described as learning the learning model indicating the radiance field, but the learning unit 304 may learn a learning model indicating three-dimensional information which can be learned based on ray groups. For example, although the radiance field indicates a color and density according to a position and orientation, the three-dimensional information is not limited to this. Specifically, for example, a color corresponding to a position in a space in the three-dimensional information may be a color having isotropy not dependent on a direction. Further, for example, the three-dimensional information may be a density field indicating a density according to a position, a field expressed by a bidirectional reflectance distribution function indicating distribution characteristics of reflected light with respect to incident light, or a field expressing light visibility of environmental light. Further, the three-dimensional information may be a field indicating a color and density corresponding to a position, direction, and time. In this case, ray groups for use in learning of the three-dimensional information are generated based on captured images as moving images including time series frames.

[Second Embodiment]

The image processing apparatus 102 according to the second embodiment will be described with reference to FIGS. 2 to 4 and 11 to 16. The image processing apparatus 102 according to the present embodiment has the hardware configuration and functional configuration illustrated in the block diagrams of FIGS. 2 or 3 like the image processing apparatus 102 according to the first embodiment. The image processing apparatus 102 according to the present embodiment executes the process of the flowchart illustrated in FIG. 4 like the image processing apparatus 102 according to the first embodiment. However, in the present embodiment, the processes in the extraction unit 302 and the ray group generation unit 303 are different from those in the first embodiment. That is, the extraction process of the high-frequency pattern region in S402 and the generation process of ray groups in S403 according to the present embodiment are different from those in the first embodiment.

Specifically, the extraction unit 302 according to the first embodiment extracts the high-frequency pattern region from the captured image using a differential filter such as a Laplacian filter in the extraction process of the high-frequency pattern region in S402. In contrast, the extraction unit 302 according to the present embodiment extracts, as a high-frequency pattern region, an image region corresponding to an approximate shape of each object including the high-frequency pattern from the captured image based on the approximate shape of the object. Further, the ray group generation unit 303 according to the present embodiment generates ray groups for each high-frequency pattern region extracted by the extraction unit 302. The following description mainly describes the extraction process of the high-frequency pattern region in the extraction unit 302 and the generation process of ray groups in the ray group generation unit 303 in the present embodiment, which are different from the processes in the first embodiment. It should be noted that a configuration or processing step which performs the same process as that in the first embodiment is denoted by the same reference numeral and its description is omitted.

<Extraction Process of High-Frequency Pattern Region>

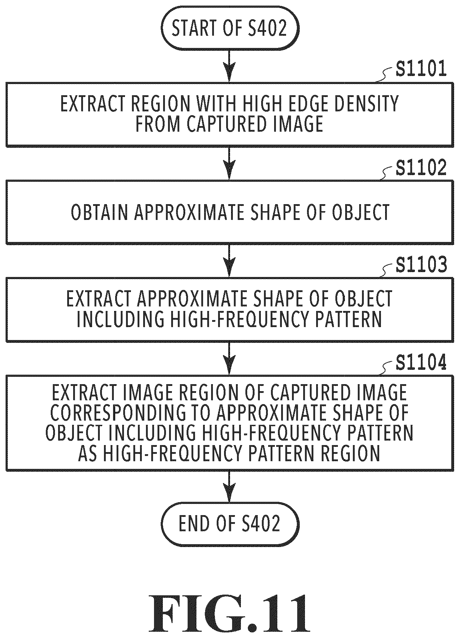

FIG. 11 is a flowchart showing an example of the flow of the extraction process of the high-frequency pattern region in the extraction unit 302 according to the second embodiment and showing an example of the detailed processing flow in S402 shown in FIG. 4. In S402 according to the second embodiment, an image region corresponding to an approximate shape including the high-frequency pattern is extracted as a high-frequency pattern region from the captured image obtained in S401 based on the approximate shape of the object. The process of this flowchart is executed after the process of S401 shown in FIG. 4.

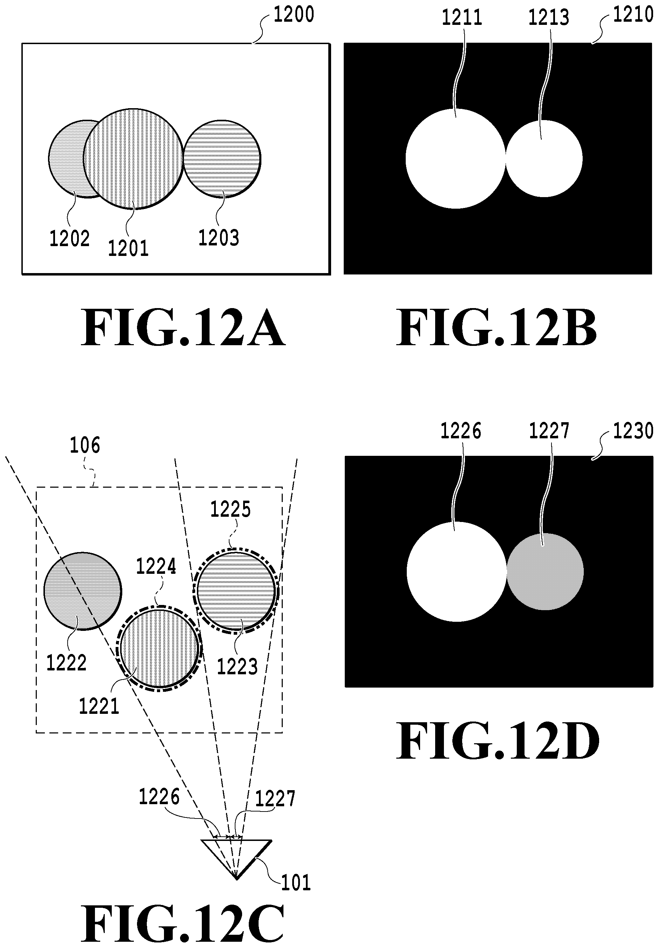

After S401, in S1101, the extraction unit 302 first extracts a region with high edge density from each captured image obtained in S401 like the first embodiment. FIGS. 12A to 12D are diagrams for explaining the extraction process of the high-frequency pattern region in the extraction unit 302 according to the second embodiment. FIG. 12A shows an example of a captured image 1200 obtained through image capturing by an image capturing apparatus 101. It is assumed that the captured image 1200 shown in FIG. 12A includes representations 1201 to 1203 of three objects existing in the image capturing region 106 as an example. It is also assumed that the high-frequency pattern is included in the object corresponding to the representation 1201 (hereinafter referred to as "object A") and the object corresponding to the representation 1203 (hereinafter referred to as "object B") among the representations 1201 to 1203 included in the captured image 1200.

FIG. 12B shows an example of an image 1210 indicating the region with high edge density extracted in S1101. The image 1210 shown in FIG. 12B is shown as a binary image in which a pixel value of the region with high edge density is 1 and a pixel value of a region with low edge density is 0 as an example. In the above example, a region 1211 corresponding to the representation 1201 of the object A and a region 1213 corresponding to the representation 1203 of the object B are extracted in S1101 as regions with high edge density. FIGS. 12C and 12D will be described later in detail.

After S1101, in S1102, the extraction unit 302 obtains an approximate shape of the object based on the captured images and image capturing parameters obtained in S401. In the present embodiment, the extraction unit 302 is assumed to obtain an approximate shape of the object expressed as a set of voxels by a visual hull method. In this case, for example, the extraction unit 302 first obtains a silhouette image of the object for each captured image obtained in S401 based on a difference between the captured image and a background image obtained by capturing only a background with no object. For example, the background image may be captured in advance and obtained by the extraction unit 302 reading data on the background image prestored in the storage device 204 or the like. Since the method of obtaining the silhouette image of the object is well known, its detailed description is omitted.

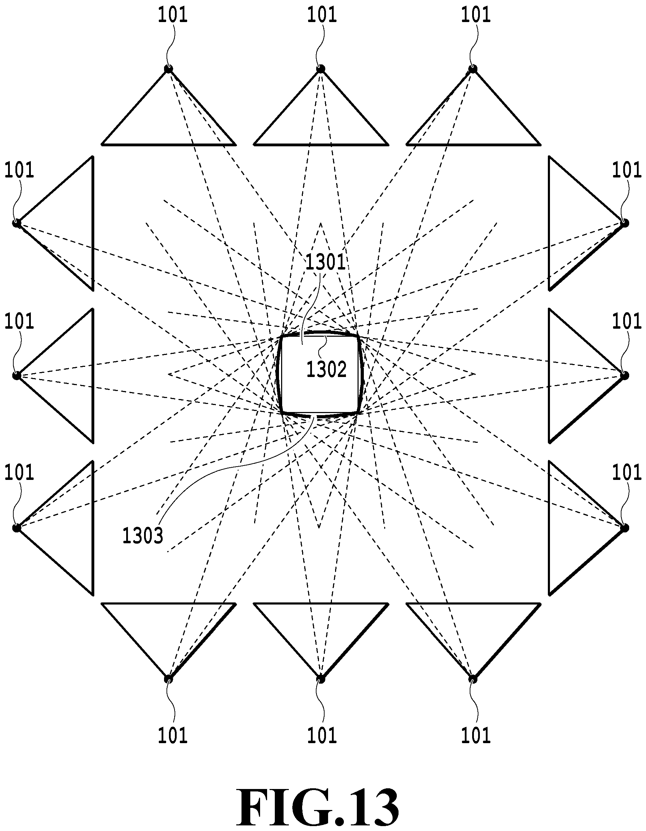

Next, the extraction unit 302 projects each voxel included in the set of voxels corresponding to the image capturing region on the silhouette image based on the image capturing parameter obtained in S401. The extraction unit 302 then obtains, as an approximate shape of the object, a set of voxels projected on a silhouette region of the object for all the silhouette images. FIG. 13 is a diagram showing an example of an approximate shape of the object 1301 obtained by the visual hull method. A rectangle surrounded by thin solid lines shows an actual outline 1302 of the object 1301 and a polygon surrounded by thick solid lines shows an outline 1303 of the approximate shape of the object 1301. Since the method of obtaining an approximate shape of an object such as a visual hull method based on a silhouette image of the object is well known, its detailed description is omitted.

After S1102, in S1103, the extraction unit 302 extracts an approximate shape of an object including the high-frequency pattern from approximate shapes of a plurality of objects obtained in S1102. Specifically, for example, the extraction unit 302 first projects each voxel corresponding to the surface of the approximate shape on each captured image using the corresponding image capturing parameter. Next, the extraction unit 302 extracts, as an approximate shape of an object including the high-frequency pattern, such an approximate shape that the number of voxels projected on a region with high edge density in the captured image is equal to or greater than a predetermined value while the approximate shape of the object is not occluded by any of the approximate shapes of the other objects.

Next, in S1104, the extraction unit 302 extracts, as a high-frequency pattern region, an image region in the captured image corresponding to the approximate shape of the object including the high-frequency pattern extracted in S1103. Specifically, the extraction unit 302 extracts, as a high-frequency pattern region, such a set of pixels that rays corresponding to the pixels intersect with the approximate shape of the object including the high-frequency pattern without being occluded by any of the approximate shapes of the other objects. After S1104, the extraction unit 302 finishes the process of the flowchart shown in FIG. 11, namely the process of S402 according to the present embodiment.

FIG. 12C shows an example of the relationship between approximate shapes 1224 and 1225 of objects including the high-frequency pattern extracted in S1103 and high-frequency pattern regions 1226 and 1227 extracted in S1104. In FIG. 12C, objects 1221 to 1223 are objects existing in the image capturing region 106 and the approximate shapes 1224 and 1225 are approximate shapes of the objects 1221 and 1223 including the high-frequency pattern, respectively. In FIG. 12C, the high-frequency pattern regions 1226 and 1227 are high-frequency pattern regions corresponding to the approximate shapes 1224 and 1225 of the objects including the high-frequency pattern, respectively. The objects 1221 and 1223 correspond to the above objects A and B, respectively.

FIG. 12D shows an example of an image 1230 showing the high-frequency pattern regions 1226 and 1227 extracted in S1104. In the image 1230 shown in FIG. 12D, the high-frequency pattern region 1226 corresponds to the approximate shape 1224 of the object 1221 including the high-frequency pattern. The high-frequency pattern region 1227 corresponds to the approximate shape 1225 of the object 1223 including the high-frequency pattern. In the following description, the high-frequency pattern region 1226 is referred to as "high-frequency pattern region A" and the high-frequency pattern region 1227 is referred to as "high-frequency pattern region B."

<Generation Process of Ray Groups>

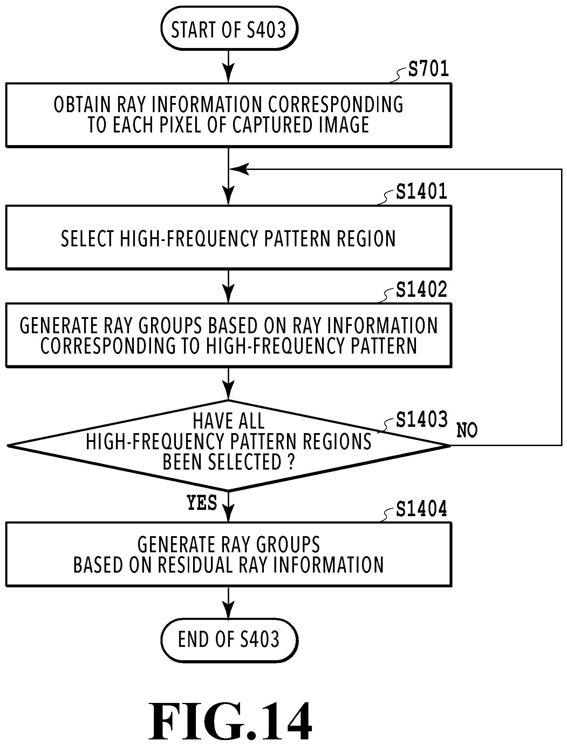

FIG. 14 is a flowchart showing an example of the flow of the generation process of ray groups in the ray group generation unit 303 according to the second embodiment and showing an example of the detailed processing flow in S403 shown in FIG. 4. In S403 according to the present embodiment, ray groups are generated for each high-frequency pattern region extracted in S402 according to the present embodiment. The process of this flowchart is executed after the process of S402 according to the present embodiment.

After S402 according to the present embodiment, the ray group generation unit 303 first executes the same process as S701 shown in FIG. 7 and obtains ray information corresponding to each pixel of the captured images based on the captured images and image capturing parameters obtained in S401. Next, in S1401, the ray group generation unit 303 selects an arbitrary high-frequency pattern region from one or more high-frequency pattern regions extracted in S402. Specifically, the ray group generation unit 303 randomly selects an arbitrary unselected high-frequency pattern region of the one or more high-frequency pattern regions. The high-frequency pattern region selected in S1401 is hereinafter referred to as "region of interest."

Next, in S1402, the ray group generation unit 303 generates a plurality of ray groups based on ray information corresponding to image coordinates of each pixel included in the region of interest (hereinafter referred to as "ray information corresponding to the region of interest"). Like the first embodiment, one ray group includes a plurality of pieces of ray information. Further, like the first embodiment, it is assumed in the present embodiment that a plurality of ray groups are generated so that the same piece of ray information corresponding to the region of interest is not included in more than one ray group. Specifically, the ray group generation unit 303 defines a predetermined number of pieces of ray information randomly selected from the ray information corresponding to the region of interest as one ray group. More specifically, the ray group generation unit 303 generates a plurality of ray groups so that the same ray information in ray information corresponding to the region of interest is not selected multiple times. The ray group generation unit 303 repeats the above process until the number of unselected pieces of ray information corresponding to the region of interest is less than a predetermined number. In this manner, a plurality of ray groups are generated so that the same piece of ray information corresponding to the region of interest is not included in more than one ray group. Incidentally, unselected pieces of ray information corresponding to the region of interest may be used as residual ray groups in the process of S1405 to be described later.

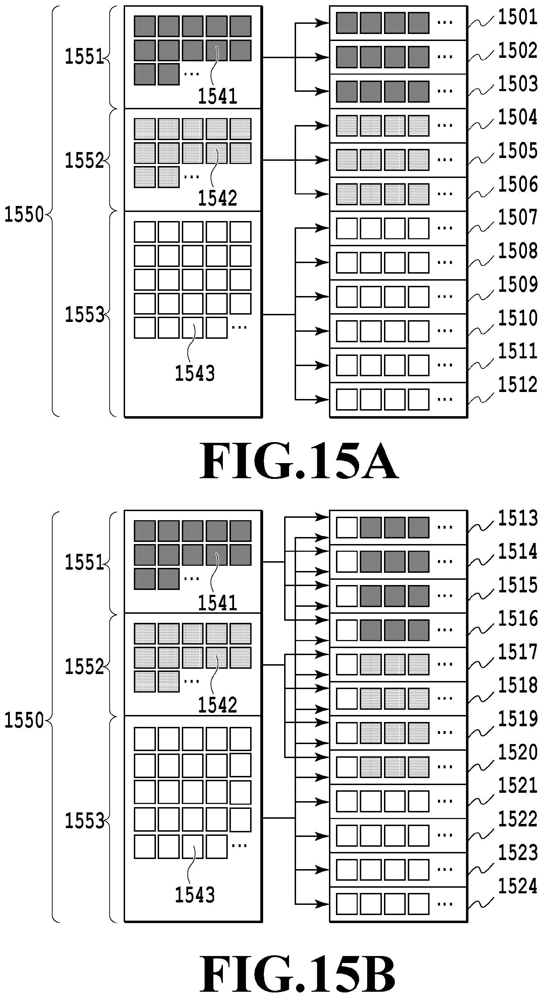

FIGS. 15A and 15B are diagrams for explaining examples of ray groups generated by the ray group generation unit 303. Specifically, FIG. 15A is a diagram for explaining an example of ray groups according to the second embodiment and FIG. 15B is a diagram for explaining an example of ray groups according to modified example 1 of the second embodiment to be described later. In FIGS. 15A and 15B, rectangles 1541 filled in dark gray represent ray information corresponding to the high-frequency pattern region A and rectangles 1542 filled in light gray represent ray information corresponding to the high-frequency pattern region B. Rectangles 1543 filled in white represent ray information (residual ray information) corresponding to image coordinates of each pixel included in a region (residual region) other than the high-frequency pattern regions A and B.

A set of ray information 1551 is a set of all pieces of ray information corresponding to the high-frequency pattern region A. Specifically, for example, the set of ray information 1551 indicates a set of pieces of ray information which are selectable by the ray group generation unit 303 for generating a plurality of ray groups in S1402 in a case where the region of interest is the high-frequency pattern region A. A set of ray information 1552 is a set of all pieces of ray information corresponding to the high-frequency pattern region B. Specifically, for example, the set of ray information 1552 indicates a set of pieces of ray information which are selectable by the ray group generation unit 303 for generating a plurality of ray groups in S1402 in a case where the region of interest is the high-frequency pattern region B. A set of ray information 1553 indicates a set of all the residual ray information. A set of ray information 1550 indicates a set of pieces of ray information corresponding to image coordinates of all the pixels included in the captured image, including all the pieces of ray information corresponding to the high-frequency pattern regions A and B and all the residual ray information.

In a case where the region of interest is the high-frequency pattern region A, the ray group generation unit 303 executes the process of S1402 and thereby generates a plurality of ray groups 1501 to 1503 illustrated in FIG. 15A, each including only the ray information corresponding to the high-frequency pattern region A. In a case where the region of interest is the high-frequency pattern region B, the ray group generation unit 303 executes the process of S1402 and thereby generates a plurality of ray groups 1504 to 1506 shown in FIG. 15A, each including only the ray information corresponding to the high-frequency pattern region B. A ray corresponding to each piece of ray information included in the ray groups 1501 to 1506 thus generated intersects with the object A or B including the high-frequency pattern.

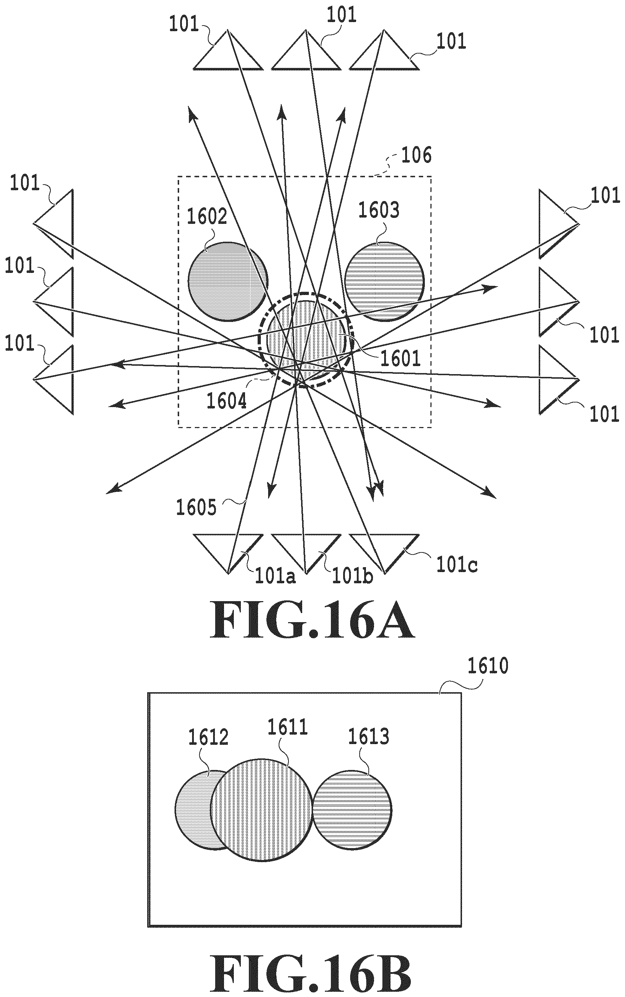

FIGS. 16A and 16B are diagrams for explaining an example of a ray 1605 corresponding to each piece of ray information included in the ray groups 1501 to 1503 shown in FIG. 15A. Specifically, FIG. 16A is a diagram of the image capturing region 106 viewed vertically from above and shows an example of the ray 1605 corresponding to each piece of ray information included in the ray groups 1501 to 1503 shown in FIG. 15A. In FIG. 15A, the objects 1601 and 1603 are objects including the high-frequency pattern and the object 1602 is an object not including the high-frequency pattern. FIG. 16B shows an example of a captured image 1610 obtained through image capturing by the image capturing apparatus 101c. The captured image 1610 shown in FIG. 16B includes representations 1611 to 1613 of the three objects 1601 to 1603 existing in the image capturing region 106.

As described above, the ray 1605 corresponding to each piece of ray information included in the ray groups 1501 to 1503 intersects with the object 1601 including the high-frequency pattern. Further, although not shown in FIG. 16A, a ray corresponding to each piece of ray information included in the ray groups 1504 to 1506 intersects with the object 1603 including the high-frequency pattern. Accordingly, even in a case where there are a plurality of objects including the high-frequency pattern, the density of rays passing through the space including the high-frequency pattern is higher than the density of rays passing through the other space. Therefore, learning can be performed using high-density ray groups for the space corresponding to the objects 1601 and 1603 including the high-frequency pattern. As a result, the three-dimensional information (radiance field) of the space corresponding to the objects including the high-frequency pattern can be estimated with high accuracy.

After S1402, in S1403, the ray group generation unit 303 judges whether all the high-frequency pattern regions extracted in S402 according to the present embodiment have been selected in S1402. In a case where the ray group generation unit 303 judges in S1403 that not all the high-frequency pattern regions have been selected, that is, there is an unselected high-frequency pattern region, the ray group generation unit 303 returns to S1401 and repeats the process from S1401 to S1403. In a case where the ray group generation unit 303 judges in S1403 that all the high-frequency pattern regions have been selected, the ray group generation unit 303 executes the process of S1404. In S1404, the ray group generation unit 303 executes the same process as S703 shown in FIG. 7 and thereby generates a plurality of ray groups based on the residual ray information. Incidentally, ray groups 1507 to 1512 shown in FIG. 15A are an example of ray groups including only the residual ray information generated by the ray group generation unit 303 executing the process of S1404.

After S1404, the ray group generation unit 303 finishes the process of flowchart shown in FIG. 14, namely the process of S403 according to the present embodiment. That is, the ray group generation unit 303 according to the present embodiment executes the process of S403 and thereby generates a plurality of ray groups 1501 to 1512 from the set of ray information 1550 corresponding to image coordinates of all the pixels included in the captured image as shown in FIG. 15A.

<Modified Example 1 of Second Embodiment>

The ray group generation unit 303 according to the second embodiment generates in S1402 ray groups including only the ray information corresponding to the high-frequency pattern region set as the region of interest. However, the method of generating ray groups in the ray group generation unit 303 is not limited to the above method. For example, the ray group generation unit 303 may generate ray groups including both the ray information corresponding to the region of interest and the residual ray information so that the number of pieces of ray information corresponding to the region of interest is equal to or greater than a predetermined number.

Specifically, for example, the number of pieces of ray information corresponding to the region of interest and the number of pieces of residual ray information to be included in one ray group are set in advance. Based on these preset numbers, the ray group generation unit 303 randomly selects ray information from both of all the pieces of ray information corresponding to the region of interest and all the pieces of residual ray information and thereby generates ray groups. For example, the number of pieces of ray information corresponding to the region of interest to be included in one ray group is set so that a ratio of the number of pieces of ray information corresponding to the region of interest to the number of all the pieces of ray information to be included in one ray group is equal to or greater than a predetermined ratio. The predetermined ratio is, for example, a ratio of the number of pixels included in the region of interest to the number of all the pixels of the captured image.

FIG. 15B shows an example of ray groups 1513 to 1516 including the ray information corresponding to the high-frequency pattern region A and the residual ray information generated through the above process by the ray group generation unit 303.

FIG. 15B also shows an example of ray groups 1517 to 1520 including the ray information corresponding to the high-frequency pattern region B and the residual ray information generated through the above process by the ray group generation unit 303. Ray groups 1521 to 1524 shown in FIG. 15B are an example of ray groups including only the residual ray information generated by the ray group generation unit 303 executing the process of S1404 after generating the ray groups 1513 to 1520.

Further, the ray group generation unit 303 according to the second embodiment generates in S1402 and S1404 a plurality of ray groups so that the same piece of ray information is not included in more than one ray group. However, the ray group generation unit 303 may generate a plurality of ray groups while allowing the same piece of ray information to be included in more than one ray group. In this case, the total number of ray groups may be equal to that in the case where the same piece of ray information is not included in more than one ray group.

Further, the extraction unit 302 according to the second embodiment obtains in S1102 the approximate shape of the object by the visual hull method, but the method of obtaining the approximate shape of the object is not limited to this. For example, the extraction unit 302 may obtain the approximate shape of the object based on distance information obtained by stereo matching or the like using the captured images obtained by the image obtaining unit 301 or distance images obtained by a depth camera. Further, information indicating the approximate shape of the object may be generated in advance and stored in the storage device 204 or the like and the extraction unit 302 may obtain the approximate shape of the object by reading the information.

Further, instead of the approximate shape of the object, the extraction unit 302 may specify a local space including the object among a plurality of local spaces obtained by dividing the image capturing region 106 and obtain a set of specified local spaces including the object as the approximate shape of the object. In this case, for example, the extraction unit 302 may obtain a local space including the approximate shape of the object as a local space including the object. Further, for example, the extraction unit 302 may obtain a local space including the object by the following method: specifically, the extraction unit 302 first extracts a feature point from each captured image obtained by the image obtaining unit 301, associates the extracted feature point of the captured images with each other, projects the feature points on a space, and then obtains a local space having a high density of projected feature points as a local space including the object.

<Advantageous Result Produced by the Image Processing Apparatus According to the Second Embodiment>

As described above, the image processing apparatus 102 according to the second embodiment extracts, as a high-frequency pattern region, an image region corresponding to an approximate shape of an object from the captured image for each object including the high-frequency pattern based on the approximate shape of the object. The image processing apparatus 102 also generates ray groups for each high-frequency pattern region. According to the image processing apparatus 102 thus configured, three-dimensional information which enables generation of a high-quality virtual viewpoint image can be estimated while reducing the amount of computations for estimating the three-dimensional information. In particular, according to the image processing apparatus 102, three-dimensional information on a space corresponding to a plurality of objects including the high-frequency pattern can be estimated with high accuracy. As a result, the image quality of a virtual viewpoint image generated based on the estimated three-dimensional information can be improved.

[Other Embodiments]

Some embodiment(s) of the present disclosure can also be realized by a computer of a system or apparatus that reads out and executes computer-executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer-executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer-executable instructions. The computer-executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory apparatus, a memory card, and the like.

According to the technique of this disclosure, three-dimensional information which enables generation of a high-quality virtual viewpoint image can be estimated while reducing the amount of computations for estimating the three-dimensional information.

While the present disclosure has described exemplary embodiments, it is to be understood that some embodiments of the disclosure are not limited to the disclosed exemplary embodiments. The scope of the following claims is to be accorded the broadest interpretation so as to encompass all such modifications and equivalent structures and functions.

**Claims**

1. An image processing apparatus (102) comprising:

    an obtaining unit (301) configured to obtain data on a captured image;
    an extraction unit (302) configured to extract a high-frequency pattern region from the captured image;
    a generation unit (303) configured to generate a plurality of ray groups based on rays corresponding to each of a plurality of pixels included in the captured image, the plurality of ray groups including one or more high-frequency pattern region ray groups which are ray groups where a density of rays corresponding to pixels included in the high-frequency pattern region is higher than a density of rays corresponding to pixels included in a region other than the high-frequency pattern region; and
    a learning unit (304) configured to learn three-dimensional information on a space using the plurality of ray groups.

2. The image processing apparatus according to claim 1, wherein
   the generation unit generates the high-frequency pattern region ray groups by randomly selecting a plurality of rays from the rays corresponding to the each of a plurality of pixels included in the high-frequency pattern region.

3. The image processing apparatus according to claim 1 or 2, wherein
   the generation unit generates the high-frequency pattern region ray groups so that a ratio of a total number of rays corresponding to the pixels included in the high-frequency pattern region to a total number of rays included in the high-frequency pattern region ray groups is equal to or greater than a predetermined ratio.

4. The image processing apparatus according to claim 3, wherein
   the predetermined ratio is equal to or greater than a ratio of a total number of the pixels included in the high-frequency pattern region to a total number of the pixels included in the captured image.

5. The image processing apparatus according to any one of claims 1 to 4, wherein
   the generation unit generates the high-frequency pattern region ray groups so that a predetermined number or more of rays corresponding to the pixels included in the high-frequency pattern region are included.

6. The image processing apparatus according to claim 5, wherein
   the predetermined number is such a number that a ratio of the predetermined number to a total number of rays included in the high-frequency pattern region ray groups is equal to or greater than a ratio of a total number of the pixels included in the high-frequency pattern region to a total number of the pixels included in the captured image.

7. The image processing apparatus according to any one of claims 1 to 6, wherein
   the generation unit generates the high-frequency pattern region ray groups including only rays corresponding to the pixels included in the high-frequency pattern region.

8. The image processing apparatus according to any one of claims 1 to 7, wherein
   the extraction unit extracts the high-frequency pattern region based on a local space corresponding to an object including a high-frequency pattern.

9. The image processing apparatus according to claim 8, wherein
   the extraction unit extracts the high-frequency pattern region for each of a plurality of objects including the high-frequency pattern based on the local space corresponding to the object.

10. The image processing apparatus according to claim 8 or 9, wherein
    the local space is an approximate shape of the object included as a representation in the captured image.

11. The image processing apparatus according to any one of claims 1 to 10, wherein
    the high-frequency pattern region is an image region of the captured image where an edge density is higher than a predetermined density.

12. The image processing apparatus according to any one of claims 1 to 11, wherein
    the generation unit generates the high-frequency pattern region ray groups by selecting a plurality of rays so that each of the rays corresponding to the pixels included in the high-frequency pattern region is not selected more than once.

13. An image processing method comprising:

an obtaining step of obtaining data on a captured image;
an extracting step of extracting a high-frequency pattern region from the captured image;
a generating step of generating a plurality of ray groups based on rays corresponding to each of a plurality of pixels included in the captured image, the plurality of ray groups including one or more high-frequency pattern region ray groups which are ray groups where a density of rays corresponding to pixels included in the high-frequency pattern region is higher than a density of rays corresponding to pixels included in a region other than the high-frequency pattern region; and
a learning step of learning three-dimensional information on a space using the plurality of ray groups.

14. A program for causing a computer to function as the image processing apparatus according to any one of claims 1 to 12.

**FIG.1**

EP 4 614 448 A1

IMAGE PROCESSING APPARATUS

```
        201              202              203              204
    ┌─────────┐      ┌─────────┐      ┌─────────┐      ┌─────────┐
    │   CPU   │      │   RAM   │      │   ROM   │      │ STORAGE │
    │         │      │         │      │         │      │ DEVICE  │
    └─────────┘      └─────────┘      └─────────┘      └─────────┘
```

208

```
        205              206                  207
    ┌─────────┐      ┌─────────┐      ┌──────────────────┐
    │CONTROL  │      │ INPUT   │      │    OUTPUT I/F    │
    │  I/F    │      │  I/F    │      │                  │
    └─────────┘      └─────────┘      └──────────────────┘
```

```
        103                  101              104              105
    ┌─────────┐      ┌──────────────────┐  ┌─────────┐      ┌─────────┐
    │UI PANEL │      │ IMAGE CAPTURING  │  │ STORAGE │      │ DISPLAY │
    │         │      │    APPARATUS     │  │APPARATUS│      │APPARATUS│
    └─────────┘      └──────────────────┘  └─────────┘      └─────────┘
```

102

**FIG.2**

102

IMAGE PROCESSING APPARATUS

301
IMAGE OBTAINING UNIT

302
EXTRACTION UNIT

303
RAY GROUP GENERATION UNIT

304
LEARNING UNIT

306
IMAGE GENERATION UNIT

307
OUTPUT UNIT

305
VIEWPOINT OBTAINING UNIT

# FIG.3

START

OBTAIN CAPTURED IMAGE DATA AND
IMAGE CAPTURING PARAMETERS ⟋S401

EXECUTE EXTRACTION PROCESS OF
HIGH-FREQUENCY PATTERN REGION ⟋S402

EXECUTE GENERATION PROCESS OF RAY GROUPS ⟋S403

EXECUTE LEARNING PROCESS OF
THREE-DIMENSIONAL INFORMATION ⟋S404

SHOULD LEARNING PROCESS
BE FINISHED ? ⟋S405 NO

YES

OBTAIN VIRTUAL CAMERA PARAMETER ⟋S406

GENERATE VIRTUAL VIEWPOINT IMAGE ⟋S407

OUTPUT VIRTUAL VIEWPOINT IMAGE ⟋S408

END

**FIG.4**

**FIG.5A**

**FIG.5B** **FIG.5C** **FIG.5D**

FIG.6A

FIG.6B

FIG.6C

EP 4 614 448 A1

START OF S403

OBTAIN RAY INFORMATION CORRESPONDING
TO EACH PIXEL OF CAPTURED IMAGE
— S701

GENERATE RAY GROUPS BASED ON RAY INFORMATION
CORRESPONDING TO HIGH-FREQUENCY PATTERN REGION
— S702

GENERATE RAY GROUPS BASED ON
RESIDUAL RAY INFORMATION
— S703

END OF S403

# FIG.7

**FIG.8A**

**FIG.8B**

**FIG.9A**

**FIG.9B**

START OF S404

SELECT RAY GROUP ⌐S1001

CALCULATE RENDERING VALUE OF RAY
BY VOLUME RENDERING ⌐S1002

UPDATE THREE-DIMENSIONAL INFORMATION SO THAT
DIFFERENCE BETWEEN RENDERING VALUE OF
RAY AND COLOR OF RAY BECOMES SMALL ⌐S1003

HAVE ALL RAY GROUPS
BEEN SELECTED ? ⌐S1004   NO

YES

END OF S404

# FIG.10

START OF S402

EXTRACT REGION WITH HIGH EDGE DENSITY
FROM CAPTURED IMAGE
S1101

OBTAIN APPROXIMATE SHAPE OF OBJECT
S1102

EXTRACT APPROXIMATE SHAPE OF OBJECT
INCLUDING HIGH-FREQUENCY PATTERN
S1103

EXTRACT IMAGE REGION OF CAPTURED IMAGE
CORRESPONDING TO APPROXIMATE SHAPE OF
OBJECT INCLUDING HIGH-FREQUENCY PATTERN
AS HIGH-FREQUENCY PATTERN REGION
S1104

END OF S402

# FIG.11

FIG.12A

FIG.12B

FIG.12C

FIG.12D

**FIG.13**

START OF S403

OBTAIN RAY INFORMATION CORRESPONDING
TO EACH PIXEL OF CAPTURED IMAGE — S701

SELECT HIGH-FREQUENCY PATTERN REGION — S1401

GENERATE RAY GROUPS BASED ON RAY INFORMATION
CORRESPONDING TO HIGH-FREQUENCY PATTERN — S1402

HAVE ALL
HIGH-FREQUENCY PATTERN REGIONS
BEEN SELECTED ? — S1403   NO

YES

GENERATE RAY GROUPS
BASED ON RESIDUAL RAY INFORMATION — S1404

END OF S403

# FIG.14

**FIG.15A**

**FIG.15B**

FIG.16A

FIG.16B

Europäisches
Patentamt
European
Patent Office
Office européen
des brevets

# EUROPEAN SEARCH REPORT

**Application Number**

EP 25 16 1492

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUN SHILEI ET AL: "Efficient ray sampling for radiance fields reconstruction", COMPUTERS AND GRAPHICS., vol. 118, 24 November 2023 (2023-11-24), pages 48-59, XP093287821, GB ISSN: 0097-8493, DOI: 10.1016/j.cag.2023.11.005 Retrieved from the Internet: URL:https://www.sciencedirect.com/science/article/pii/S0097849323002868> * abstract * * sections 2 and 3; figures 2, 4 * | 1-14 | INV. G06T17/00 G06T15/08 |
| A | LIN HAOTONG HAOTONGL@ZJU EDU CN ET AL: "Efficient Neural Radiance Fields for Interactive Free-viewpoint Video", EQUITY AND ACCESS IN ALGORITHMS, MECHANISMS, AND OPTIMIZATION, ACMPUB27, NEW YORK, NY, USA, 29 November 2022 (2022-11-29), pages 1-9, XP058957009, DOI: 10.1145/3550469.3555376 ISBN: 978-1-4503-9478-9 * abstract * | 1-14 | |
| A | XU LINNING ET AL: "Grid-guided Neural Radiance Fields for Large Urban Scenes", 2023 IEEE/CVF CONFERENCE ON COMPUTER VISION AND PATTERN RECOGNITION (CVPR), IEEE, 17 June 2023 (2023-06-17), pages 8296-8306, XP034401156, DOI: 10.1109/CVPR52729.2023.00802 [retrieved on 2023-08-22] * abstract * | 1-14 | |

**TECHNICAL FIELDS SEARCHED (IPC)**

G06T

The present search report has been drawn up for all claims

| Place of search | Date of completion of the search | Examiner |
|---|---|---|
| Berlin | 18 June 2025 | Gao, Miao |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023066705 A